# DEMANDE DE BREVET EUROPEEN

(11) **EP 0 784 382 A2**
(43) Date de publication de la demande: **16.07.1997**
(21) Numéro de dépôt: 97200041.8
(22) Date de dépôt: 08.01.1997
(51) Int. Cl.: H04B 1/38, H04M 1/66

(54) **Appareil muni d'un adaptateur permettant la lecture de cartes à puces aux formats différents**

(30) Priorité: 10.01.1996 FR 9600217
(71) Demandeur: Philips Electronics N.V., 5621 BA Eindhoven (NL)
(72) Inventeur: Jubert, Laurent, 75008 Paris (FR)
(74) Mandataire: Caron, Jean

(57) **Abrégé**

L'invention présente un appareil, par exemple un téléphone portable, muni d'un lecteur de cartes à puce comportant un connecteur pouvant être mis en contact avec les bornes d'un circuit intégré présent sur une carte à puce conforme à un premier format dit format full-SIM, muni en outre d'un adaptateur (4) permettant l'introduction et la lecture d'une carte à puce conforme à un deuxième format dit format micro-SiM, caractérisé en ce que l'adaptateur (4) est composé d'une pièce amovible et réversible présentant deux faces, la première, dite face full-SIM, étant pratiquement lisse, la deuxième, dite face micro-SIM, présentant une glissière (5) et une butée (6), et en ce que l'appareil est muni d'une cavité servant de réceptacle à l'adaptateur (4), cavité configurée de sorte que, lorsque l'adaptateur (4) est disposé en mode de lecture d'une carte à puce au format full-SIM, seule sa face full-SIM soit apparente et placée en vis-à-vis du connecteur du lecteur de cartes à puce, et lorsque l'adaptateur (4) est disposé en mode de lecture d'une carte à puce au format micro-SIM, seule sa face micro-SIM soit apparente, la cavité servant de réceptacle à l'adaptateur (4) ainsi que la glissière (5) et la butée (6) de ce dernier étant disposés de sorte que les bornes du circuit intégré présent sur la carte micro-SIM soient placées en vis-à-vis du connecteur du lecteur de cartes à puce après insertion de ladite carte.

Application : Téléphones portables

## Description

La présente invention concerne un appareil, par exemple un téléphone portable, muni d'un lecteur de cartes à puce comportant un connecteur pouvant être mis en contact avec les bornes d'un circuit intégré présent sur une carte à puce conforme à un premier format dit format full-SIM, muni en outre d'un adaptateur permettant l'introduction et la lecture d'une carte à puce conforme à un deuxième format dit format micro-SIM.

Un tel appareil est connu du brevet européen n°0 556 970 A1. Cet appareil comporte un adaptateur qui, lorsque disposé en mode de lecture d'une carte à puce conforme au format full-SIM, c'est-à-dire le format standard pour une carte à puce, est placé dans une cavité afin qu'il ne fasse pas obstacle au passage de la carte, et, lorsque disposé en mode de lecture d'une carte à puce conforme au format micro-SIM, c'est-à-dire une carte dont la surface est réduite à la surface nécessaire pour y apposer un circuit intégré, bascule au moyen d'une liaison pivot et plaque les bornes dudit circuit intégré contre le connecteur du lecteur de cartes à puce. La liaison pivot mise en oeuvre présente un inconvénient : lors du basculement de l'adaptateur, celui-ci fait saillie avec le corps de l'appareil et devient alors vulnérable aux chocs. Un choc transversal peut en effet briser certaines des parties formant la liaison pivot, désolidarisant ainsi irrémédiablement l'adaptateur de l'appareil.

La présente invention a pour but de remédier à cet inconvénient, en proposant un adaptateur qui s'intègre, sans faire saillie, au corps de l'appareil.

En effet, selon la présente invention, un appareil du type défini dans le paragraphe introductif est caractérisé en ce que l'adaptateur est composé d'une pièce amovible et réversible présentant deux faces, la première, dite face full-SIM, étant pratiquement lisse, la deuxième, dite face micro-SIM, présentant une glissière et une butée, et en ce que l'appareil est muni d'une cavité servant de réceptacle à l'adaptateur, cavité configurée de sorte que, lorsque l'adaptateur est disposé en mode de lecture d'une carte à puce au format full-SIM, seule sa face full-SIM soit apparente et placée en vis-à-vis du connecteur du lecteur de cartes à puce, et lorsque l'adaptateur est disposé en mode de lecture d'une carte à puce au format micro-SIM, seule sa face micro-SIM soit apparente, la cavité servant de réceptacle à l'adaptateur ainsi que la glissière et la butée de ce dernier étant disposés de sorte que les bornes du circuit intégré présent sur la carte micro-SIM soient placées en vis-à-vis du connecteur du lecteur de cartes à puce après insertion de ladite carte.

Un mode de réalisation particulier de l'invention présente un appareil tel que décrit ci-dessus, caractérisé en ce que le corps de l'adaptateur a la forme d'une réglette et en ce que la cavité servant de réceptacle audit adaptateur a la forme femelle associée, l'ensemble formant une liaison glissière.

Une variante de l'invention présente un appareil tel que décrit ci-dessus, muni d'un boîtier amovible destiné à être fixé en position de fonctionnement en vis-à-vis du lecteur de cartes à puce, caractérisé en ce que la cavité servant de réceptacle à l'adaptateur est placée sur le boîtier amovible.

Un tel boîtier amovible peut, par exemple, contenir une batterie servant à l'alimentation électrique de l'appareil.

L'invention sera mieux comprise à l'aide de la description suivante d'un mode de réalisation, faite à titre d'exemple et en regard des dessins annexés, dans lesquels :
- la figure 1 est une représentation schématique d'un appareil mettant en oeuvre l'invention,
- la figure 2 est une représentation schématique d'un boîtier amovible conforme à une variante de l'invention, et
- la figure 3 est une représentation schématique d'un boîtier amovible conforme à une variante de l'invention.

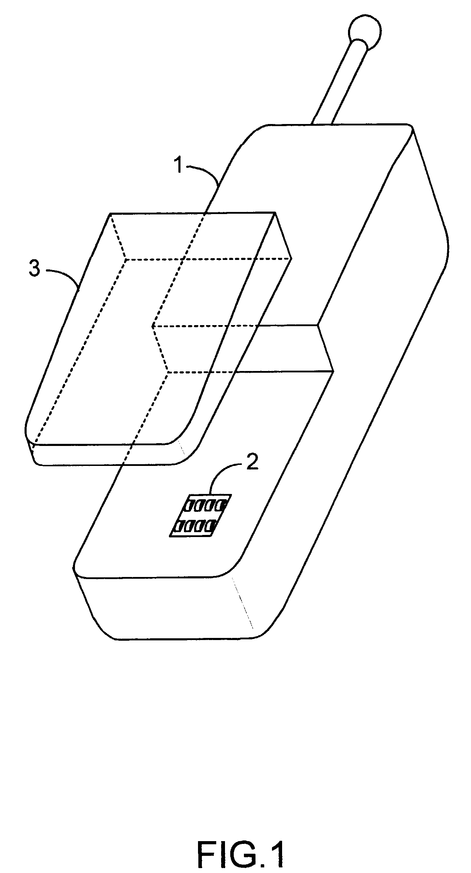

La figure 1 représente schématiquement un appareil 1, par exemple un téléphone portable, muni d'un lecteur de cartes à puce comportant un connecteur 2 pouvant être mis en contact avec les bornes d'un circuit intégré présent sur une carte à puce conforme à un premier format dit format full-SIM. L'appareil 1 est en outre muni d'un boîtier amovible 3, contenant par exemple une batterie servant à l'alimentation électrique dudit appareil 1. En position de fonctionnement, ce boîtier amovible 3 est fixé en vis-à-vis du lecteur de cartes à puce.

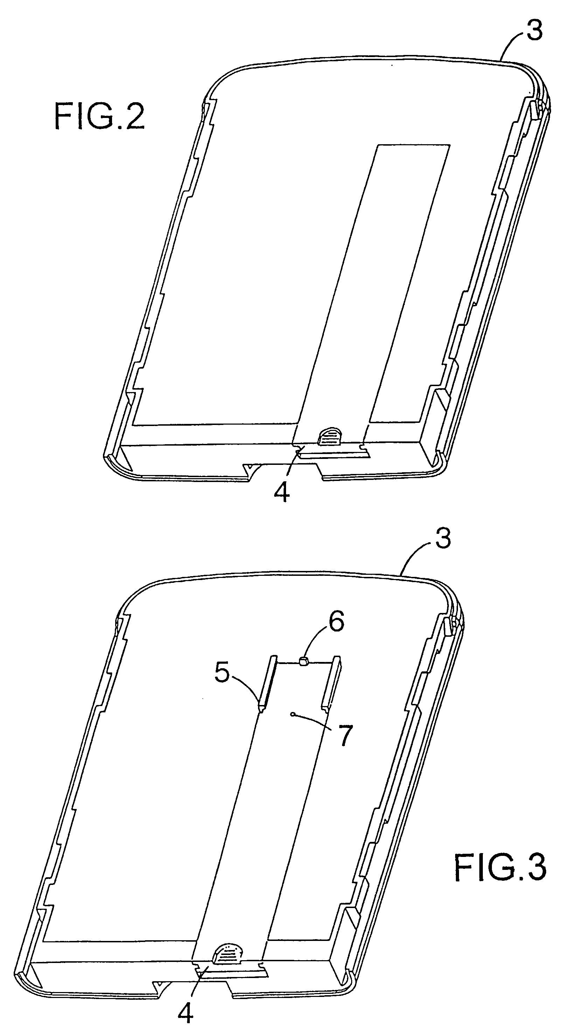

La figure 2 représente schématiquement ledit boîtier amovible 3, sur lequel est placée une cavité servant de réceptacle à un adaptateur 4. L'adaptateur 4 est disposé en mode de lecture d'une carte à puce conforme au format full-SIM. Seule sa face full-SIM, destinée à être placée en vis-à-vis du connecteur du lecteur de cartes à puce, est apparente. Ainsi, la partie de l'adaptateur 4 qui sert au positionnement de cartes à puces conformes au format micro-SIM est noyée dans le corps du boîtier amovible 3, de façon à ne pas faire obstacle au passage de la carte à puce conforme au format full-SIM,

La figure 3 représente schématiquement le même boîtier amovible 3, sur lequel l'adaptateur 4 a été disposé en mode de lecture d'une carte à puce au format micro-SIM. La face micro-SIM de l'adaptateur 4, présentant une glissière 5 et une butée 6 est alors apparente, la cavité servant de réceptacle à l'adaptateur 4 ainsi que la glissière 5 et la butée 6 de ce dernier étant disposés de sorte que les bornes du circuit intégré présent sur la carte micro-SIM soient placées en vis-à-vis du connecteur du lecteur de cartes à puce 2 après insertion de ladite carte. La face micro-SIM présente également un picot 7, permettant de maintenir la carte micro-SIM plaquée contre les rails de la glissière 5 après son insertion.

## Revendications

1. Appareil, par exemple un téléphone portable, muni d'un lecteur de cartes à puce comportant un connecteur pouvant être mis en contact avec les bornes d'un circuit intégré présent sur une carte à puce conforme à un premier format dit format full-SIM, muni en outre d'un adaptateur permettant l'introduction et la lecture d'une carte à puce conforme à un deuxième format dit format micro-SIM, caractérisé en ce que l'adaptateur est composé d'une pièce amovible et réversible présentant deux faces, la première, dite face full-SIM, étant pratiquement lisse, la deuxième, dite face micro-SIM, présentant une glissière et une butée, et en ce que l'appareil est muni d'une cavité servant de réceptacle à l'adaptateur, cavité configurée de sorte que, lorsque l'adaptateur est disposé en mode de lecture d'une carte à puce au format full-SIM, seule sa face full-SIM soit apparente et placée en vis-à-vis du connecteur du lecteur de cartes à puce, et lorsque l'adaptateur est disposé en mode de lecture d'une carte à puce au format micro-SIM, seule sa face micro-SIM soit apparente, la cavité servant de réceptacle à l'adaptateur ainsi que la glissière et la butée de ce dernier étant disposés de sorte que les bornes du circuit intégré présent sur la carte micro-SIM soient placées en vis-à-vis du connecteur du lecteur de cartes à puce après insertion de ladite carte.

2. Appareil selon la revendication 1, caractérisé en ce que le corps de l'adaptateur a la forme d'une réglette et en ce que la cavité servant de réceptacle audit adaptateur a la forme femelle associée, l'ensemble formant une liaison glissière.

3. Appareil selon l'une des revendications 1 ou 2, muni d'un boîtier amovible destiné à être fixé en position de fonctionnement en vis-à-vis du lecteur de cartes à puce, caractérisé en ce que la cavité servant de réceptacle à l'adaptateur est placé sur le boîtier amovible.
